# EUROPEAN PATENT APPLICATION

(11) **EP 4 542 296 A1**
(43) Date of publication of application: **23.04.2025**
(21) Application number: 23822739.1
(22) Date of filing: 29.03.2023
(51) Int. Cl.: G02F 1/153

(54) **ELECTROCHROMIC DIAPHRAGM AND COLOR CHANGING GLASS**

(30) Priority: 16.06.2022 CN 202210685619
(71) Applicant: Guangyi Intelligent Tech (Suzhou) Co., Ltd., Suzhou, Jiangsu 215000 (CN)
(72) Inventor: WANG, Weishu, Suzhou, Jiangsu 215000 (CN)
(74) Representative: Bals & Vogel Patentanwälte PartGmbB
(86) International application number: PCT/CN2023/084715
(87) International publication number: WO 2023/241168

(57) **Abstract**

An electrochromic film (100) and an electrochromic glass. The electrochromic film (100) includes a first conductive substrate (110), an electrochromic layer (120), and a second conductive substrate (130) laminated sequentially; an edge of the first conductive substrate (110) is provided with a first accommodating groove (111), an edge of the second conductive substrate (130) is provided with a second accommodating groove (131), and an edge of the electrochromic layer (120) is provided with at least two third accommodating grooves (121); the first accommodating groove (111) and the third accommodating groove (121) are in communication with each other to form a first groove (140); the second accommodating groove (131) and the third accommodating groove (121) are in communication with each other to form a second groove (150); both the width of the first groove (140) and the width of the second groove (150) are a, and a distance between orthographic projections of any adjacent the first groove (140) and the second groove (150) onto the plane of the electrochromic layer (120) is b, and b≤a. A necessary space margin is provided at the edge of the electrochromic film (100) through the first groove (140) and the second groove (150), so as to greatly reduce or avoid wrinkles at the edge of the electrochromic film (100), thereby the aesthetics of the electrochromic film (100) and the visual experience of users are improved.

## Description

The present application claims for priority of Chinese application No. 202210685619.5, filed on June 16, 2022, entitled "An electrochromic film and electrochromic glass", the entire contents of which are incorporated herein by reference.

### TECHNICAL FIELD

The present application relates to electrochromism, and more specifically to an electrochromic film and an electrochromic glass.

### BACKGROUND

Electrochromism is the phenomenon in which the optical properties (reflectivity, transmittance, absorption rate, etc.) of a material undergo stable and reversible color changes under the action of an external electric field, manifested as reversible changes both in color and transparency in appearance.

Electrochromism is widely used in display devices, large posters or information boards and other announcement devices, smart windows, building window glass, vehicle mirrors, flexible displays, vehicle skylights, sports glasses, etc. to adjust the transmittance or reflectivity. With the recent discovery that it not only changes color in the visible light range but also has an infrared shielding effect, its application prospects as an energy saving product have attracted much attention.

The existing electrochromic film can be bent to match curved surfaces and other scenarios. However, in some application scenarios, such as the sunroof glass of vehicles, not only the electrochromic film needs to be bent on one side, but it also needs to be bent on both sides or multiple sides, which makes the electrochromic film prone to wrinkle, and a plurality of wrinkles tend to appear especially at the edges of the electrochromic film. This not only makes it unacceptable in appearance, but also leads to a deterioration in visual experience.

### TECHNICAL PROBLEMS

An object of the present application is to overcome the shortcomings of prior technology and provide an electrochromic film and an electrochromic glass.

### SUMMARY

An aspect of the present application is to provide an electrochromic film, which includes a first conductive substrate, an electrochromic layer, and a second conductive substrate laminated sequentially; an edge of the first conductive substrate having a first accommodating groove, an edge of the second conductive substrate having a second accommodating groove, and an edge of the electrochromic layer having at least two third accommodating grooves; an orthographic projection of the first accommodating groove onto a plane where the electrochromic layer is overlapped with at least one third accommodating groove, and the first accommodating groove and the third accommodating groove are in communication with each other to form a first groove; an orthographic projection of the second accommodating groove onto the plane where the electrochromic layer is overlapped with at least one third accommodating groove, and the second accommodating groove and the third accommodating groove are in communication with each other to form a second groove; the first groove and the second groove are alternately arranged at an edge of the electrochromic film; and the width of the first groove and the width of the second groove are both defined as a, and a distance between orthographic projections of any adjacent first groove and second groove onto the plane of the electrochromic layer is defined as b, wherein b≤a.

**In** one aspect of the present application, the width of the grooves is a and the distance between the grooves is b, by increasing the width of the grooves or decreasing the width of the distance between two adjacent grooves to make the width of the grooves greater than the distance, i.e. a≥b. Therefore, during bending the electrochromic film, sufficient space for bending can be provided by a wider groove, or less wrinkles are generated in the groove spacing area by reducing the distance between two adjacent grooves. Therefore, wrinkles on the electrochromic film, especially at the edge of the electrochromic film, are reduced even avoided, and the electrochromic film is more aesthetic.

Optionally, b ≤ 30mm; preferably, b ≥ 1mm; furthermore, 2mm≤b≤15mm. **In** general, the space between two adjacent grooves, namely is the uncut areas of the conductive substrate, electrochromic layer, and the like of the electrochromic film, in which wrinkles are more easily and seriously appeared. When the value of b is too large, the wrinkles of the electrochromic film are more obvious or severe. The groove area corresponds to the exposed conductive surface of the conductive substrate, for example, the first groove can expose the conductive surface of the second conductive substrate, and the second groove can expose the conductive surface of the first conductive substrate. Therefore, when the value of b between two adjacent grooves is too small, it is easy to cause electrical connection between the two conductive surfaces, thereby a short circuit is formed. Therefore, by limiting the range of b, wrinkles on the electrochromic film can be effectively reduced or even avoided, and the formation of short circuits can also be avoided, the aesthetics of the electrochromic film and the safety as well as reliability of using the film is improved.

Optionally, 5≤a/b; preferably, 5≤a/b≤50; furthermore, the sum of a and b satisfies the following relationship: 90mm≤a+b≤750mm. In this case, by further increasing a or reducing b, the effect of reducing wrinkle can be further improved, or less wrinkles are generated, thereby the generation of wrinkles on the electrochromic film can be further reduced or avoided, so as to meet the requirements for the degree of wrinkles on the electrochromic film in different application scenarios and further improve the aesthetics of the electrochromic film.

Optionally, none of the first conductive substrate and the second conductive substrate has a thicknesses less than 120µm. Furthermore, none of the first conductive substrate and the second conductive substrate has a thicknesses less than 150µm. Therefore, by arranging the thickness values of the conductive substrates meet a specific size, the wrinkles of the electrochromic film can be further reduced, and the aesthetics of the electrochromic film can be further enhanced.

Optionally, an arch height of the electrochromic film along a first direction is H₁, and an arch height of the electrochromic film along a second direction is H₂. The product of H₁ and H₂ satisfies a following relationship: H1 × H2 ≤ 2500mm². Preferably, the first direction is perpendicular to the second direction. In some application scenarios, the electrochromic film may undergo bending in multiple directions, such as the electrochromic film can be bent along two directions to form a hyperbolic structure. For example, the electrochromic film bends along the first direction to form the arch height H₁, and bends along the second direction to form the arch height H₂; the product of the arch heights in two directions are limited to be within a specific range, especially when the two directions are further defined to be perpendicular to each other, the effect of wrinkle relief can be further improved, and the aesthetics of the electrochromic film can be further enhanced.

Optionally, the depth of the first groove and the depth of the second groove are both h, where 0<h≤ 100mm. Preferably, the range of h is 20mm≤h≤80mm. In general, if the depth of the groove is too small, the exposed conductive surface of the conductive substrate is less, which is not conducive to the conductive extraction on the conductive substrate. If the depth of the groove is too large, and the electrochromic layer that is cut off is wider, which results in a narrower electrochromic area of the electrochromic film. Therefore, by limiting the depth of the groove within a certain range can ensure that there is sufficient conductive surface for conductive extraction, and also ensure that the electrochromic film has a sufficiently wide electrochromic area, and the practical area of the film is improved.

Another aspect of the present application also provides an electrochromic glass, which includes a plurality of glass layers and the above-mentioned electrochromic film. The electrochromic film is laminated between at least two layers of the glass layers. Therefore, by laminating the electrochromic film between the glass layers, the glass layers can provide a good clamping effect onto the electrochromic film, the occurrence of wrinkles on the electrochromic film can be further avoided or reduced, thereby the overall aesthetics of the electrochromic glass is improved.

### BENEFICIAL EFFECTS

The technical solution of the present application has the following advantages: by adjusting the width of the first groove and the second groove, as well as the distance between adjacent first groove and the second groove, so as to provide a space for bending the edge of the electrochromic film, and to greatly reduce or avoid wrinkles formed at the edge of the electrochromic film, thereby the aesthetics of the electrochromic film is improved, and the visual experience of users is improved.

In order to make the above purposes, features, and advantages of the present application more obvious and understandable, preferred embodiments with drawings are detailedly described as follows.

### BRIEF DESCRIPTION OF THE DRAWINGS

In order to explain the embodiments of the present application more clearly, a brief introduction regarding the accompanying drawings is given as below; it should be understood that the accompanying drawings are only demonstrated some embodiments of the present application, therefore, they should not be regarded as limiting the scope, for those skilled in the art, other drawings can also be obtained according to the current drawings without paying no creative labor.
FIG. 1 is a schematic structural diagram of an electrochromic film provided in some embodiments of the present application from a perspective view;
FIG. 2 is a schematic structural diagram of an electrochromic film provided in some embodiments of the present application from another perspective view;
FIG. 3 is a schematic structural diagram of an electrochromic layer in an electrochromic film provided in some embodiments of the present application from a perspective view;
FIG. 4 is a schematic structural diagram of a first conductive substrate in an electrochromic film provided in some embodiments of the present application from a perspective view;
FIG. 5 is a schematic structural diagram of a second conductive substrate in an electrochromic film provided in some embodiments of the present application from a perspective view;
FIG. 6 is a schematic structural diagram of other structure of an electrochromic film provided in some embodiments of the present application from a perspective view;
FIG. 7 is a sectional diagram of a part A-A in FIG. 6; and
FIG. 8 is an enlarged view of a part B in FIG. 7.

The reference signs of main components are listed:
100-electrochromic film; 110-first conductive substrate; 120-electrochromic layer; 130-second conductive substrate; 111-first accommodating groove; 131-second accommodating groove; 121-third accommodating groove; 140-first groove; 150-second groove; 112-first substrate layer; 113-first conductive layer; 132-second substrate layer; 133-second conductive layer; 200- first busbar; 300-second busbar; and 400-sealant.

### DETAILED DESCRIPTION OF EMBODIMENTS

Herein, embodiments of the present application are described in detail, and examples of the embodiment are illustrated in the accompanying figures; wherein, an unchanged reference number or similar reference numbers represent(s) identical or similar components or components having identical or similar functionalities. The embodiment described below with reference to the accompanying figures is illustrative and intended to illustrate the present application, but should not be considered as any limitation to the present application.

It is noted that when a component is referred to as being "fixed to" another component, it can be directly or indirectly fixed on another component. When a component is referred to as being "connected to" another component, it can be directly connected to another component or there may be an intermediate component presented at the same time between the two components. On the contrary, when a component is referred to as "directly on" another component, there is no intermediate component. The terms "vertical", "horizontal", "left", "right", and other similar expressions used in the present application are for illustrative purposes only.

In the present application, unless there is additional explicit stipulation and limitation, terms such as "mount", "connect with each other", "connect", "fix", and so on should be generally interpreted, for example, "connect" can be interpreted as being fixedly connected, detachably connected, or connected integrally; "connect" can also be interpreted as being mechanically connected or electrically connected; "connect" can be further interpreted as being directly connected or indirectly connected through intermediary, or being internal communication between two components or an interaction relationship between the two components. For the one of ordinary skill in the art, the specific meanings of the aforementioned terms in the present application can be interpreted according to specific conditions.

In addition, terms "the first" and "the second" are only used in describing purposes, and should not be considered as indicating or implying any relative importance, or impliedly indicating the number of indicated technical features. As such, technical feature(s) restricted by "the first" or "the second" can explicitly or impliedly comprise one or more such technical feature(s). In the description of the present application, "a plurality of" means two or more, unless there is additional explicit and specific limitation.

Unless otherwise defined, all technical and scientific terms used in the present application have the same meanings as those commonly understood by those skilled in the art of the present application. The terms used in the specification are only for the purpose of describing specific embodiments and are not intended to limit the present application. The term "and/or" used in the present application includes any and all combinations of one or more related listed items.

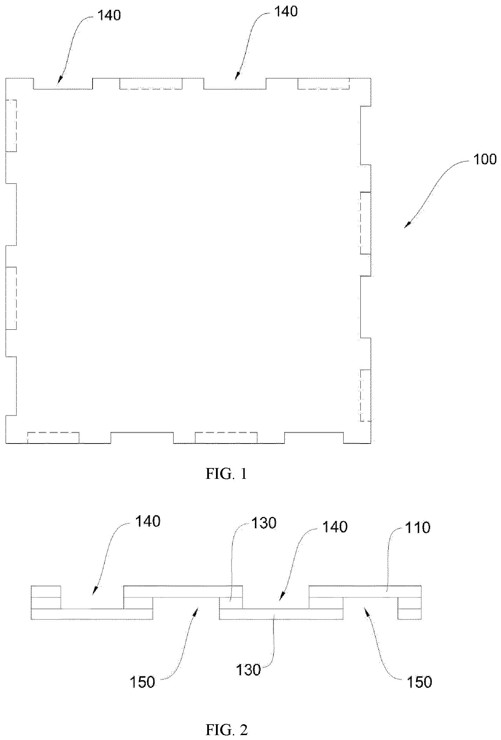

As shown in FIGS. 1 to 5, some embodiments of the present application provide an electrochromic film 100, which is mainly applied in the field of electrochromism, such as in building windows, vehicle windows, and aircraft windows, etc. The electrochromic film 100 includes a first conductive substrate 110, an electrochromic layer 120, and a second conductive substrate 130 that are sequentially laminated.

Both the first conductive substrate 110 and the second conductive substrate 130 completely cover the electrochromic layer 120.

In addition, the first conductive substrate 110 includes a first substrate layer 112 and a first conductive layer 113 that are laminated, and the first conductive layer 113 is laminated between the first substrate layer 112 and the electrochromic layer 120. The first conductive layer 113 completely covers the electrochromic layer 120.

Meanwhile, the second conductive substrate 130 includes a second substrate layer 132 and a second conductive layer 133 laminated thereon, and the second conductive layer 133 is laminated between the second substrate layer 132 and the electrochromic layer 120. The second conductive layer 133 completely covers the electrochromic layer 120.

It should be noted that the first conductive layer 113 and the second conductive layer 133 are respectively used for connecting with an external power source. By connecting the first conductive layer 113 and the second conductive layer 133 to the external power sources respectively, an external electric field is formed between the first conductive layer 113 and the second conductive layer 133, thereby stable and reversible color changes in the electrochromic layer 120 under the action of the external electric field are generated.

Specifically, an edge of the first conductive substrate 110 is provided with a first accommodating groove 111, an edge of the second conductive substrate 130 is provided with a second accommodating groove 131, and an edge of the electrochromic layer 120 is provided with at least two third accommodating grooves 121.

It should be noted that the number of the first accommodating grooves 111 and the second accommodating grooves 131 can both be any number of one, two or more values, which can be arranged according to the actual situation; and the number of the third accommodating grooves 121 can all be any number of two or more values.

The first accommodating groove 111 can be provided on any side of the first conductive substrate 110. Optionally, the first accommodating grooves 111 are provided on at least two sides of the first conductive substrate 110, that is, the first accommodating grooves 111 can be provided on any two sides of the first conductive substrate 110. Optionally, a first accommodating groove 111 is provided on each side of the edge of the first conductive substrate 110. In addition, the second accommodating groove 131 can be provided on either side of the second conductive substrate 130. Optionally, the second accommodating grooves 131 are provided on at least two sides of the second conductive substrate 130, that is, the second accommodating groove 131 can be provided on any side of the second conductive substrate 130. Optionally, a second accommodating groove 131 is provided on each side of the edge of the second conductive substrate 130.

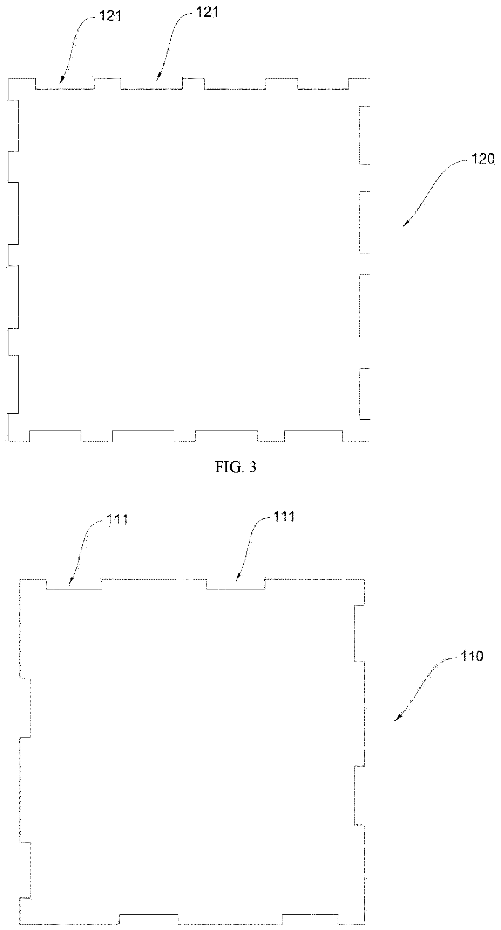

As shown in FIGS. 3 to 5, in the present embodiment, the total number of the first accommodating grooves 111 and the second accommodating grooves 131 is equal to the number of third accommodating grooves 121.

It should be noted that an orthographic projection of the first accommodating groove 111 onto a plane where the electrochromic layer 120 is located overlaps with at least a third accommodating groove 121, and the first accommodating groove 111 and the third accommodating groove 121 are in communication with each other to form a first groove 140. In the embodiment, a first accommodating groove 111 is in communication with a third accommodating groove 121 to form a first groove 140.

Meanwhile, an orthographic projection of the second accommodating groove 131 onto the plane where the electrochromic layer 120 is located overlaps with at least a third accommodating groove 121, and the second accommodating groove 131 and the third accommodating groove 121 are in communication with each other to a second groove 150. In the embodiment, a second accommodating groove 131 and a third accommodating groove 121 are in communication with each other to form a second groove 150.

Specifically, the first groove 140 and the second groove 150 are alternately arranged at an edge of the electrochromic film 100.

Preferably, as shown in FIGS. 1 and 2, in some embodiments of the present application, a plurality of first grooves 140 and a plurality of second grooves 150 are provided, and at least one first groove 140 and at least one second groove 150 are provided on each side of the edge of the electrochromic film 100. Specifically, the orthogonal projections of the first groove 140 and the second groove 150 onto the plane where the electrochromic layer 120 is located are spaced apart, that is, the first groove 140 and the second groove 150 form a staggered groove structure at the edge of the electrochromic film 100.

The width of the first groove 140 and the width of the second groove 150 are both a.

It should be noted that the width of the first groove 140 refers to the length of the first groove 140 located on one side parallel to the edge of the electrochromic film 100 in the direction perpendicular to the thickness of the electrochromic film 100.

The width of the second groove 150 refers to the length of the second groove 150 located on one side parallel to the edge of the electrochromic film 100 in the direction perpendicular to the thickness of the electrochromic film 100.

The distance between orthographic projections of any adjacent the first groove 140 and the second groove 150 onto the plane of the electrochromic layer 120 is b, and b≤a.

It can be understood that the width of each groove is arranged to be a and the distance between two adjacent grooves is arranged to be b, by increasing a or decreasing b to make a≥b. Therefore, during the bending process of the electrochromic film, sufficient space for bending can be provided by a wider groove, or the amount of wrinkles generated in the groove spacing area can be reduced by reducing the spacing between the grooves through a smaller groove distance. Therefore, the generation of wrinkles on the electrochromic film (especially the generation of wrinkles on the edge of the electrochromic film) is reduced or avoided, and the aesthetics of the electrochromic film is improved.

In some embodiments of the present application, b≤30mm.

It should be noted that the distance b between the adjacent first groove 140 and the second groove 150 is more than 0.

The range of b can be any one selected from a group of 0<b≤30mm, 0<b≤25mm, 0<b ≤20mm, 0<b≤15mm, 0<b≤10mm, 0<b≤5mm, 5≤b≤30mm, 5≤b≤25mm, 5≤b≤20mm, 5 ≤b≤15mm, 5≤b≤10mm, 10≤b≤30mm, 10≤b≤25mm, 10≤b≤20mm, 10≤b≤15mm, 15≤ b≤25mm, 15≤b≤20mm, 20≤b≤30mm, 20≤b≤25mm, and 25≤b≤30mm.

In some embodiments of the present application, the range of b is b≥1mm. It can be understood that the distance b between the adjacent first groove 140 and the second groove 150 can be any value greater than 1.

Optionally, in some embodiments of the present application, the range of b is 2mm≤b ≤15mm.

The range of b can be any one selected from a group of 2mm≤b≤15mm, 3mm≤b≤ 15mm, 4mm≤b≤15mm, 5mm≤b≤15mm, 6mm≤b≤15mm, 7mm≤b≤15mm, 8mm≤b≤ 15mm, 9mm≤b≤15mm, 10mm≤b≤15mm, 11mm≤b≤15mm, 12mm≤b≤15mm, 13mm≤b ≤15mm, 14mm≤b≤15mm, 2mm≤b≤14mm, 2mm≤b≤13mm, 2mm≤b≤12mm, 2mm≤b≤ 11mm, 2mm≤b≤10mm, 2mm≤b≤9mm, 2mm≤b≤8mm, 2mm≤b≤7mm, 2mm≤b≤6mm, 2mm≤b≤5mm, 2mm≤b≤4mm, 2mm≤b≤3mm, 3mm≤b≤14mm, 5mm≤b≤13mm, 6mm≤ b≤12mm, 7mm≤b≤11mm, and 8mm≤b≤10mm.

Optionally, in some embodiments of the present application, the ratio of a to b is a/b, where 5≤a/b. It should be noted that the ratio a/b of a to b can be any value greater than or equal to 5, which can be arranged according to the actual situation.

Specifically, by increasing the ratio between the width a of the first groove 140 and the second groove 150 and the distance b between adjacent first grooves 140 and the second groove 150, the wrinkle depth of the electrochromic film 100 can be ameliorated.

Optionally, in some embodiments of the present application, the ratio of a to b is a/b, where 5≤a/b≤50.

It should be noted that the the ratio a/b of a to b can be any one selected from 5≤a/b≤ 50, 5≤a/b≤45, 5≤a/b≤40, 5≤a/b≤35, 5≤a/b≤30, 5≤a/b≤25, 5≤a/b≤20, 5≤a/b≤50, 5≤ a/b≤15, 5≤a/b≤10, 10≤a/b≤50, 10≤a/b≤45, 10≤a/b≤40, 10≤a/b≤35, 10≤a/b≤30, 10≤ a/b≤25, 10≤a/b≤20, 10≤a/b≤15, 15≤a/b≤50, 15≤a/b≤45, 15≤a/b≤40, 15≤a/b≤40, 15 ≤a/b≤35, 15≤a/b≤30, 15≤a/b≤25, 15≤a/b≤20, 20≤a/b≤50, 20≤a/b≤45, 20≤a/b≤40, 20 ≤a/b≤35, 20≤a/b≤30, 20≤a/b≤25, 25≤a/b≤50, 25≤a/b≤45, 25≤a/b≤40, 25≤a/b≤35, 25 ≤a/b≤30, 30≤a/b≤50, 30≤a/b≤45, 30≤a/b≤40, 30≤a/b≤35, 35≤a/b≤50, 35≤a/b≤45, 35 ≤a/b≤45 b ≤ 40, 40≤a/b≤50, 40≤a/b≤45, and 45≤a/b≤50.

Preferably, the sum of a and b satisfies the following relationship: 90mm≤a+b≤750mm, and the range of a+b can be any one selected from a group of 90mm≤a+b≤750mm, 100mm≤a+b ≤750mm, 150mm≤a+b≤750mm, 150mm≤a+b≤700mm, 150mm≤a+b≤650mm, 150mm≤ a+b≤600mm, 150mm≤a+b≤550mm, 150mm≤a+b≤500mm, 150mm≤a+b≤450mm, 150mm ≤ a+b ≤ 400mm, 150mm ≤ a+b ≤ 350mm, 150mm ≤ a+b ≤ 300mm, 150mm ≤ a+b ≤ 250mm, 150mm ≤ a+b ≤ 200mm. 200mm ≤ a+b ≤ 750mm, 200mm ≤ a+b ≤ 700mm, 200mm ≤ a+b ≤ 650mm, 200mm≤a+b≤600mm, 200mm≤a+b≤550mm, 200mm≤a+b≤500mm, 200mm≤a+b ≤450mm, 200mm≤a+b≤400mm, 200mm≤a+b≤350mm, 200mm≤a+b≤300mm, 200mm≤ a+b≤250mm, 250mm≤a+b≤750mm, 300mm≤a+b≤750mm, 350mm≤a+b≤750mm, 400mm ≤ a+b ≤ 750mm, 400mm ≤ a+b ≤ 750mm 450mm ≤ a+b ≤ 750mm, 500mm ≤ a+b ≤ 750mm, 550mm≤a+b≤750mm, 600mm≤a+b≤750mm, 650mm≤a+b≤750mm, and 700mm≤a+b≤ 750mm.

It should be noted that in the embodiment, the range of a/b can be any one of the above ranges, and the range of a+b can be any one of the above ranges.

**Table 1-wrinkle depth variation of electrochromic film**

| Example | No. | a/mm | b/mm | wrinkle depth/mm |
|---|---|---|---|---|
| Reference examples (b>a and b>30) | 1 | 50 | 80 | 56 |
| | 2 | 50 | 70 | 53 |
| | 3 | 50 | 60 | 48 |
| Embodiments (b≤a and b=1-30) | 1 | 88 | 30 | 40 |
| | 2 | 88 | 20 | 34 |
| | 3 | 88 | 15 | 30 |
| | 4 | 88 | 10 | 25 |
| | 5 | 88 | 8 | 21 |
| | 6 | 88 | 5 | 19 |

It should be noted that in Table 1, the thickness of the first conductive substrate and the thickness of the second conductive substrate are both 188 µ m.

The reference example in Table 1 shows the wrinkle depth variation of the edge of the electrochromic film 100 when b>a and b>30.

Specifically, in the reference example in Table 1, when a=50mm, as the value of b decreases from 80 to 60, the wrinkle depth of the electrochromic film 100 also gradually decreases. It can be understood that when the width of the first groove 140 and the second groove 150 remains unchanged, as the distance between adjacent first grooves 140 and the second groove 150 gradually decreases, the wrinkle depth of the electrochromic film 100 gradually decreases.

It should be noted that although the wrinkle depth of the electrochromic film 100 decreases with the decrease of b in the reference example in Table 1, the wrinkle depth is not less than 48mm and still remains at a relatively larger value. That is, in the reference example, the wrinkle depth at the edge of the electrochromic film 100 is not significantly varied by adjusting the distance b between adjacent first grooves 140 and second grooves 150.

In addition, the embodiment in Table 1 shows the wrinkle variation at the edge of the electrochromic film 100 when b≤a and 1≤b≤30.

Specifically, in the embodiment in Table 1, when a=88, as the value of b decreases from 30 to 5, the wrinkle depth value of the electrochromic film 100 gradually decreases from 40mm to 19mm. It should be noted that in the embodiment in Table 1, as b changes, the wrinkle depth of the electrochromic film 100 is smaller than that of the electrochromic film 100 in the reference examples. That is, in the embodiment in Table 1, when a=88, the value of b can be reduced to significantly change the wrinkle depth of the electrochromic film.

In addition, in the embodiment in Table 1, when b decreases from 8 to 5, the wrinkle depth of the electrochromic film 100 decreases from 21mm to 19mm. It can be understood that at this time, the wrinkle depth of the electrochromic film 100 changes relatively less. That is, when b is not greater than 8, the amelioration effect on the wrinkle depth of the electrochromic film is not significant as the b value decreases.

Therefore, it can be deduced from Table 1 that in the present embodiment, when a=88 and 5≤b≤8, the amelioration effect on the wrinkle depth of the electrochromic film 100 is the best. That is, when the thickness of the first conductive substrate 110 and the thickness of the second conductive substrate 130 are both 188 µ m, a=88 and 5≤b≤8, the amelioration of the wrinkle depth of the electrochromic film is the best.

Preferably, in some embodiments of the present application, when the thickness of the first conductive substrate 110 and the thickness of the second conductive substrate 130 are both 188 µ m, a=88 and 5≤b≤8, the wrinkle amelioration of the electrochromic film is the best.

**Table 2-wrinkle depth variation of electrochromic film**

| Example | No. | thickness of substrate PET+ITO (first conductive substrate or second conductive substrate) /µm | wrinkle depth/mm |
|---|---|---|---|
| Reference examples (thickness of substrate<120) | 1 | 60 | 130 |
| | 2 | 80 | 125 |
| | 3 | 100 | 120 |
| Embodiments (thickness of substrate ≧ 120) | 1 | 125 | 110 |
| | 2 | 150 | 60 |
| | 3 | 188 | 21 |
| | 4 | 250 | 18 |
| | 5 | 400 | <15 |

It should be noted that in Table 2, the width of the first groove 140 and the second groove 150 are both 88mm, that is, a=88mm. The distance between adjacent first groove 140 and second groove 150 is 8mm, that is, b=8mm.

The reference examples in Table 2 show the changes of the wrinkle depth at the edge of the electrochromic film 100 as the thickness of the first conductive substrate 110 and the second conductive substrate 130 gradually increase.

Specifically, when the thicknesses of the first conductive substrate 110 and the thickness of the second conductive substrate 130 both gradually increase from 60 µ m to 100 µ m, the wrinkle depth at the edge of the electrochromic film 100 decreases from 130mm to 120mm. It can be understood that the change in thickness is greater than the change in wrinkle depth. At this time, the change in thicknesses of the first conductive substrate 110 and the second conductive substrate 130 has a relatively small effect on the amelioration of wrinkle depth of the electrochromic film 100.

As shown in the embodiments in Table 2, the thickness of the first conductive substrate 110 and the thickness of the second conductive substrate 130 gradually increase from 125 µ m to 188 µ m, the wrinkle depth at the edge of the electrochromic film 100 decreases from 110mm to 21mm. The change in thickness of the electrochromic film 100 is 63 µ m. The change in wrinkle depth of the electrochromic film 100 is about 89mm, and the ratio of the change in thickness of electrochromic film 100 to the change in wrinkle depth is about 0.7, which is less than 1. Therefore, the increasing of the thickness of the electrochromic film can significantly ameliorate the wrinkle of the electrochromic film.

Meanwhile, in the embodiments in Table 2, the wrinkle depth of the electrochromic film 100 is smaller than that of the electrochromic film 100 of reference examples in Table 2. It can be understood that as the thicknesses of the first conductive substrate 110 and the second conductive substrate 130 gradually increase, the wrinkle depth of the electrochromic film becomes smaller and has a very significant amelioration.

In addition, the embodiments in Table 2 show that the thickness of the first conductive substrate 110 and the thickness of the second conductive substrate 130 gradually increase from 188 µ m to 400 µ m, the wrinkle depth of the electrochromic film decreases from 21mm to less than 15mm. It should be noted that the change in thickness of the electrochromic film 100 is 212 µ m. The change in wrinkle depth of electrochromic film 100 is about 6mm, and the ratio of the change in thickness to the change in wrinkle depth of the electrochromic film 100 is about 35, and the ratio is far greater than 1. At this time, the change in thickness of the electrochromic film 100 has very little effect on ameliorating the wrinkle of the electrochromic film 100.

It can be understood that when the thickness of the first conductive substrate 110 and the thickness of the second conductive substrate 130 reach 188 µ m, respectively, there is no significant amelioration in the wrinkle depth of the electrochromic film when the thickness is continue to increase.

Therefore, it can be deduced from Table 2 that when a=88mm, b=8, and the thickness of the first conductive substrate 110 and the thickness of the second conductive substrate 130 are 188 µ m, respectively; the amelioration effect on the wrinkle depth of the electrochromic film 100 is the best.

Preferably, in some embodiments of the present application, the thickness of the first conductive substrate 110 and the thickness of the second conductive substrate 130 are both not less than 120 µ m. It can be understood that the thickness of the first conductive substrate 110 and the thickness of the second conductive substrate 130 can both be any value greater than or equal to 120 µ m, which can be arranged according to the actual situation.

Specifically, it can be deduced from Table 2 that when the thickness of the first conductive substrate 110 and the thickness of the second conductive substrate 130 are both ranged from 120 µ m to 150 µ m, as the thickness increases, the wrinkle depth of the electrochromic film 100 gradually decreases, and wrinkle depth is not less than 60mm, which still be a relatively larger wrinkle value. It can be understood that within this thickness range, the wrinkle depth of the electrochromic film 100 can been ameliorated.

More preferably, in some embodiments of the present application, the thickness of the first conductive substrate 110 and the thickness of the second conductive substrate 130 are both not less than 150 µ m. It can be understood that the thickness of the first conductive substrate 110 and the thickness of the second conductive substrate 130 can both be any value greater than or equal to 150 µ m, which can be arranged according to the actual situation.

It can be deduced from Table 2 that when the thickness of the first conductive substrate 110 and the thickness of the second conductive substrate 130 are both ranged from 150 µ m to 188 µ m, the wrinkle depth of the electrochromic film 100 decreases from 60 to 19, the change in thickness is 38, and the change in wrinkle depth of the electrochromic film 100 is 41, the ratio of the change in thickness to the change in wrinkle depth is about 0.926, the ratio is less than 1. It can be understood that when the first conductive substrate 110 and the second conductive substrate 130 are in this thickness range, the wrinkle depth of the electrochromic film 100 gradually decreases to 19mm. At this time, the wrinkle depth of the electrochromic film 100 decreases to a smaller value. It can be understood that within this thickness range, the wrinkle depth of the electrochromic film 100 can been further ameliorated.

In some embodiments of the present application, the arch height of the electrochromic film 100 along the first direction is H1, and the arch height of the electrochromic film 100 along the second direction is H2. The product of H1 and H2 satisfies the following relationship: H1 ×H2≤ 2500mm2.

Specifically, arch height H1 refers to the bending height of the electrochromic film 100 with a length of one meter in the first direction , and arch height H2 refers to the bending height of the electrochromic film 100 with a length of one meter in the second direction.

The first direction is perpendicular to the second direction. In addition, the first direction and the second direction are perpendicular to the thickness direction of the electrochromic film 100, respectively.

It should be noted that H1 ×H2≤2500mm2 means that the product value range between the arched height H1 of the electrochromic film 100 in the first direction and the arched height H2 of the electrochromic film 100 in the second direction in each square meter of the electrochromic film 100 is H1×H2≤2500mm2.

Specifically, the range of H1 ×H2 can be any one selected from a group of H1×H2≤ 2500mm2, H1 × H2 ≤ 2400mm2, H1 × H2 ≤ 2300mm2, H1 × H2 ≤ 2200mm2, H1 × H2 ≤ 2100mm2, H1 × H2 ≤ 2000mm2, H1 × H2 ≤ 1900mm2, H1 × H2 ≤ 1800mm2, H1 × H2 ≤ 1700mm2, H1 × H2 ≤ 1600mm2, H1 × H2 ≤ 1500mm2, H1 × H2 ≤ 1400mm2, H1 × H2 ≤ 1300mm2, H1 × H2≤1200mm2, H1 ×H2≤1100mm2, H1 ×H2≤1000mm2, H1 ×H2≤900mm2, H1×H2≤800mm2, H1×H2≤700mm2, H1×H2≦600mm2, H1 ×H2≤500mm2, H1 ×H2 ≤ 400mm2, H1 ×H2≤300mm2, H1 ×H2≤200mm2, and H1 ×H2≤100mm2.

By reducing the arch height of the electrochromic film 100 in the first direction and the second direction, the wrinkles generated at the edges of the electrochromic film 100 can be alleviated or eliminated, so as to improve the aesthetics of the electrochromic film 100.

In addition, in some embodiments of the present application, the depth of the first groove 140 and the depth of the second groove 150 are both h, and 0<h≤100mm.

It should be noted that the depth of the first groove 140 is equal to the sum of the thickness of the first conductive substrate 110 and the thickness of the electrochromic layer 120, and the depth of the second groove 150 is equal to the sum of the thickness of the second conductive substrate 130 and the thickness of the electrochromic layer 120.

In some embodiments of the present application, due to the thickness of the first conductive substrate 110 being equal to the thickness of the second conductive substrate 130, the depth of the first groove 140 is equal to the depth of the second groove 150.

Specifically, the range of values for h can be any range selected from a group of: 0<h ≤100mm, 10mm<h≤100mm, 20 mm<h≤100mm, 30mm<h≤100mm, 40 mm<h≤100mm, 50mm<h≤100mm, 60mm<h≤100mm, 70mm<h≤100mm, 80mm<h≤100mm, 90mm<h≤ 100mm, 0<h≤90mm, 10mm<h≤90mm, 20mm<h≤90mm, 30mm<h≤90mm, 40mm<h≤ 90mm, 50mm<h≤90mm, 60mm<h≤90mm, 70mm<h≤90mm, 80mm<h≤90mm, 0<h≤ 80mm, 10mm<h≤80mm, 20mm<h≤80mm, 30mm<h≤80mm, 40mm<h≤80mm, 50mm<h ≤80mm, 60mm<h≤80mm, 70mm<h≤80mm, 0<h≤70mm, 10mm<h≤70mm, 20mm<h≤ 70mm, 30mm<h≤70mm, 40mm<h≤70mm, 50mm<h≤70mm, 60mm<h≤70mm, 0<h≤ 60mm, 10mm<h≤60mm, 20mm<h≤60mm, 30mm<h≤60mm, 40mm<h≤60mm, 50mm<h ≤60mm, 0<h≤50mm, 10mm<h≤50mm, 20mm<h≤50mm, 30mm<h≤50mm, 40mm<h≤ 50mm, 0<h≤40mm, 10mm<h≤40mm, 20mm<h≤40mm, 30≤m<h≤40mm, 0<h≤30mm, 10mm<h≤30mm, 20mm<h≤30mm, 0<h≤20mm, 10mm<≤20mm, and 0<h≤10mm; which can be specified according to actual situations.

It can be understood that in some embodiments of the present application, the depth of the first groove 140 and the depth of the second groove 150 are determined by the thickness of the first conductive substrate 110, the thickness of the second conductive substrate 130, and the thickness of the electrochromic layer 120; that is, the increasing or decreasing the thickness of the first conductive substrate 110, the thickness of the second conductive substrate 130, and the thickness of the electrochromic layer 120 can increase or decrease the depth of the first groove 140 and the depth of the second groove 150.

In some embodiments of the present application, the shape of the electrochromic film 100 can be any one of polygons, regular polygons, or irregular shapes, which can be arranged according to the actual situation.

The value of a in the electrochromic film 100 can correspond to one value, two values, or multiple values. It should be noted that when the value of a in the electrochromic film 100 only corresponds to one value, that is, the width of each first groove 140 is equal to that of each second groove 150.

When the value of a corresponds to two values, and the corresponding two values of a are defined as a1 and a2 respectively, where a1 is not equal to a2, and the range of values of a1 and a2 is equal to the range of values of a. The width of the first groove 140 and the width of the second groove 150 can be any of the values a1 and a2.

When the value of a corresponds to multiple values, and the corresponding multiple values of a are defined as a1, a2... an, where the value of n can be an integer greater than 2, and the range of the value of an is equal to that of a.

It can be understood that the value of the first groove 140 can be any value in a1, a2... an, and the value of the second groove 150 can be any value in a1, a2... an, which can be arranged according to the actual situation.

In addition, the value of b in the electrochromic film 100 can correspond to one or more values. It should be noted that when the value of b of the electrochromic film 100 only corresponds to one value, that is, the distance between the orthographic projections of any adjacent first groove 140 and the second groove 150 on the plane of the electrochromic layer 120 is equal .

When the value of b corresponds to multiple values, and the corresponding multiple values of b are defined as b1, b2... bn, where n can be an integer of any value not less than 2, and the range of values of bn is equal to that of b. That is, the distance between the orthographic projections of any adjacent first groove 140 and the second groove 150 on the plane of the electrochromic layer 120 can be any one of b1, b2... and bn, which can be arranged according to the actual situation.

The wrinkle depth of the electrochromic film 100 described in the present application refers to the wrinkle depth at the edge of the electrochromic film 100.

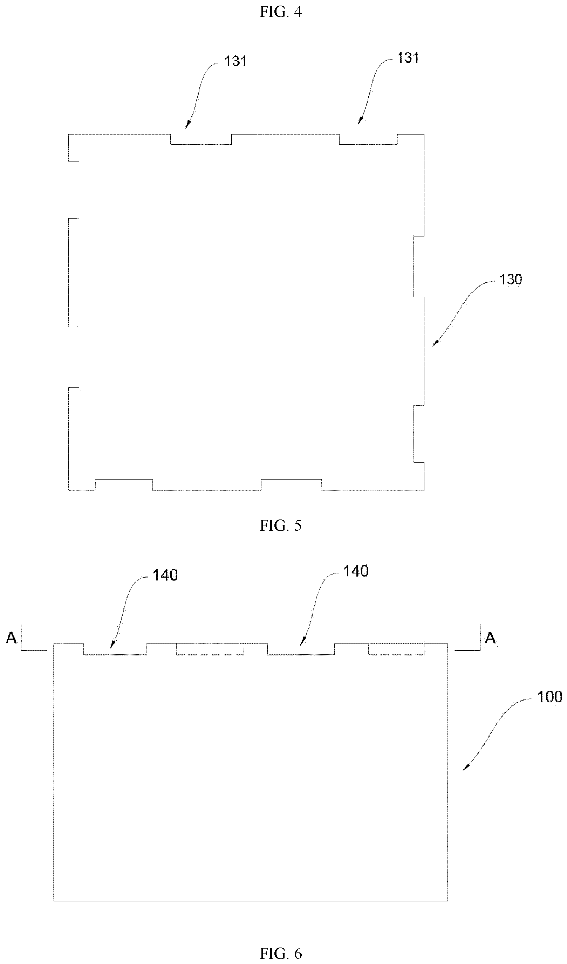

As shown in FIGS. 6 to 8, in some embodiments of the present application, a periphery of each first groove 140 and a periphery of each second groove 150 are provided with a sealant 400, respectively.

The second conductive substrate 130 is fixed by a sealing layer arranged in the periphery of the first groove 140, and the electrochromic layer 120 opposite the first groove 140 is separated from the external air and water. The first conductive substrate 110 is fixed by a sealing layer arranged in the periphery of the second groove 150, and the electrochromic layer 120 opposite the second groove 150 is separated from the external air and water to prevent external water and oxygen from entering the electrochromic film 100, and improve the service life and the stability of the electrochromic layer 120.

It should be noted that the sealant 400 is a high-temperature adhesive, which is mainly made of components such as silicoaluminate and inorganic ceramic powder, etc., and is a high-temperature adhesive that meets different temperature resistance requirements. The temperature resistance ranges from 200° C to 1800° C.

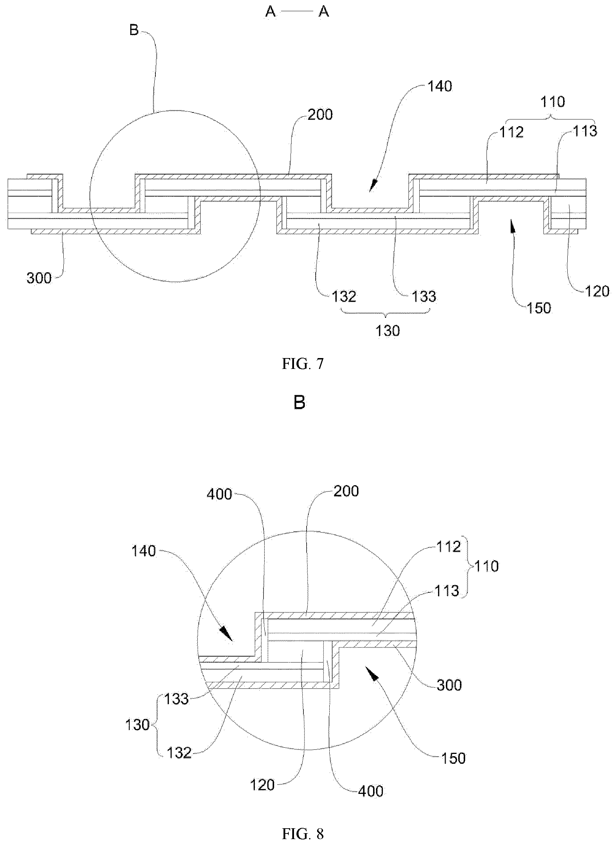

As shown in FIG. 7, in some embodiments of the present application, a first busbar 200 is provided at an edge of one side of the first conductive substrate 110 away from the electrochromic layer 120, and the first busbar 200 is laminated on the edge of the side of the first conductive substrate 110 away from the electrochromic layer 120.

Specifically, a portion of the first busbar 200 is located in the first groove 140, and the first busbar 200 located in the first groove 140 forms a "concave" shape in the first groove 140; and a portion of the first busbar 200 located in the first groove 140 is adhered to the sealant 400 on the inner wall of the first groove 140 to fix the first busbar 200 through the sealant 400 and improve the stability of the first busbar 200 on the first conductive substrate 110. In addition, a portion of the first busbar 200 located at the bottom of the first groove 140 is electrically connected to a portion of the second conductive layer 133 exposed in the first groove 140. At the same time, the sealant 400 can provide insulation support for the first busbar 200 and the second busbar 300, the electrical contact between the first busbar 200 and the second busbar 300 can be avoided, thereby the occurrence of short circuits in the electrochromic film 100 can be avoided.

Meanwhile, a second bus bar 300 is provided at an edge of one side of the second conductive substrate 130 away from the electrochromic layer 120, and the second bus bar 300 is laminated on the edge of the side of the second conductive substrate 130 away from the electrochromic layer 120.

Specifically, a portion of the second busbar 300 is located in the second groove 150, and the second busbar 300 located in the second groove 150 forms a "concave" shape in the second groove 150; and a portion of the second busbar 300 located in the second groove 150 is adhered to the sealant 400 on the inner wall of the second groove 150 to fix the first busbar 200 through the sealant 400 and improve the stability of the first busbar 200 on the first conductive substrate 110. In addition, a portion of the second busbar 300 located at the bottom of the second groove 150 is electrically connected to a portion of the first conductive layer 113 exposed in the second groove 150.

It should be noted that the electrical connection points of the electrochromic film can be more evenly distributed by arranging the plurality of first grooves and the plurality of second grooves at the edges of the electrochromic film, the uniformity of electrical conductivity to the first substrate layer and the second conductive substrate layer is improved. The first busbar 200 and the second busbar 300 are electrically connected to the external power source respectively, so that an external electric field is formed between the first conductive layer 113 and the second conductive layer 133, and the color changing efficiency and stability of electrochromic film 100 are improved.

Other embodiments of the present application further provide an electrochromic glass, which includes glass layers and an electrochromic film 100 as described in any of the above embodiments.

The electrochromic film 100 is laminated between at least two layers of the glass layers.

In the embodiment, the electrochromic film 100 is laminated between two glass layers to form the electrochromic glass.

It should be noted that the two glass layers completely cover the electrochromic film 100.

In all the examples shown and described here, any specific value should be interpreted as merely illustrative and not as a limitation, therefore, other examples of exemplary embodiments may have different values.

It should be noted that similar reference signs and letters represent similar terms in the following figures. Therefore, once a term is defined in one figure, it does not need to be further defined or explained in subsequent figures.

The above embodiments only express several embodiments of the present application, and the description is more specific and detailed, but cannot be understood as a limitation on the scope of the present application. It should be pointed out that for those skilled in the art, several modifications and improvements can be made without departing from the concept of the present application, all of which fall within the scope of protection of the present application.

## Claims

1. An electrochromic film, comprising:
a first conductive substrate, an electrochromic layer, and a second conductive substrate laminated sequentially;
wherein an edge of the first conductive substrate is provided with a first accommodating groove, an edge of the second conductive substrate is provided with a second accommodating groove, and an edge of the electrochromic layer is provided with at least two third accommodating grooves;
an orthographic projection of the first accommodating groove onto a plane where the electrochromic layer is located overlaps with at least one third accommodating groove, and the first accommodating groove and the third accommodating groove are in communication with each other to form a first groove;
an orthographic projection of the second accommodating groove onto the plane where the electrochromic layer is located overlaps with at least one third accommodating groove, and the second accommodating groove and the third accommodating groove are in communication with each other to form a second groove;
the first groove and the second groove are alternately arranged at an edge of the electrochromic film; and
both the width of the first groove and the width of the second groove are a, and a distance between orthographic projections of any adjacent first groove and second groove onto the plane of the electrochromic layer is b, wherein b≤a.

2. The electrochromic film according to claim 1, **characterized in that** a range of the b is b ≤ 30mm.

3. The electrochromic film according to claim 1, **characterized in that** a range of the b is b≥ 1mm.

4. The electrochromic film according to claim 1, **characterized in that** a range of the b is 2mm ≤b≤15mm.

5. The electrochromic film according to claim 1, **characterized in that** a ratio of the a to the b is a/b, and 5≤a/b.

6. The electrochromic film according to claim 1, **characterized in that** a ratio of the a to the b is a/b, and 5≤a/b≤50; and preferably,a sum of the a and the b satisfies a following relationship: 90mm<a+b≤750mm.

7. The electrochromic film according to claim 1, **characterized in that** none of the first conductive substrate and the second conductive substrate has a thickness less than 120µm.

8. The electrochromic film according to claim 1, **characterized in that** an arch height of the electrochromic film along a first direction is H₁, and an arch height of the electrochromic film along a second direction is H₂, wherein a product of H₁ and H₂ satisfies a following relationship: H₁ ×H₂ ≤2500mm², and the first direction is perpendicular to the second direction.

9. The electrochromic film according to claim 1, **characterized in that** both of a depth of the first groove and a depth of the second groove are h, and 0<h≤100mm.

10. An electrochromic glass, comprising glass layers and the electrochromic film according to any one of claims 1-9; and
the electrochromic film is laminated between at least two layers of the glass layers.
